Europäisches Patentamt

(19) European Patent Office

Office européen des brevets

(11) Publication number: **0 050 898**
**B1**

(12) **EUROPEAN PATENT SPECIFICATION**

(45) Date of publication of patent specification: **19.03.86**

(21) Application number: **81201161.7**

(22) Date of filing: **20.10.81**

(51) Int. Cl.⁴: **F 16 K 1/30,** F 17 C 13/04,
G 05 D 16/06, F 16 L 29/00

(54) **Pressure regulating and shut-off valve.**

(30) Priority: **23.10.80 US 200021**
**09.02.81 US 232977**

(43) Date of publication of application:
**05.05.82 Bulletin 82/18**

(45) Publication of the grant of the patent:
**19.03.86 Bulletin 86/12**

(84) Designated Contracting States:
**AT BE CH DE FR GB IT LI LU NL SE**

(56) References cited:
**EP-A-0 050 947**
**WO-A-82/01542**
**DE-C- 80 730**
**FR-A-1 192 490**
**US-A-2 611 390**
**US-A-2 625 016**
**US-A-2 888 949**

(73) Proprietor: **Cadbury Schweppes Limited**
**1-4 Connaught Place**
**London, W2 2EX (GB)**

(72) Inventor: **Jeans, Edward Lewis**
**St. Michaels South Parade**
**Ledbury Hertfordshire (GB)**

(74) Representative: **Denmark, James**
**c/o Bailey Walsh & Co. 5 York Place**
**Leeds LS1 2SD Yorkshire (GB)**

Courier Press, Leamington Spa, England.

# Description

This invention relates to a pressure regulating valve which is for use in an opening in the neck of a gas cylinder.

In a system utilizing gas from a high pressure cylinder for example, for the supply of carbon dioxide therefrom, it is usual to provide coupling means connecting the cylinder to a supply line, a valve controlling the on-off supply of high pressure gas through the supply line, and a pressure regulator for causing a reduction in pressure between the cylinder outlet and a gas consumption point in the system. The valve is arranged to be opened selectively when the coupling is made between the cylinder and supply line. The regulator is normally located in the supply line.

In various applications, there is a need for the coupling to be a quick release coupling, enabling quick connection of the supply line to and from such a cylinder. One construction of a quick release coupling is disclosed in our WO—A—82/01542, published 13.5.82 with US-priority of 23.10.80.

It is known, as set forth in US—A—2,611,390 to provide a pressure relief valve which opens when the pressure inside a container whose pressure is to be controlled exceeds a predetermined value. This pressure relief valve operates in that a valve closure moves against spring pressure to release the pressure, and when the pressure is released, the spring automatically closes the valve which will only be opened again when the pressure increases to said predetermined value. This valve is not used for controlling gas flow as in the present invention, but the functioning has similarities with the operation of the assembly according to the invention.

There are also known pressure regulators or relief valves as shown in US—A—2,611,390 and US—A—2,888,949 which comprise essentially a movable valve part which sealingly engages another fixed valve part. The movable valve part is spring loaded and hence the regulation of the valve is controlled by the pressure of the gas passing through the valve, the gas pressure acting to urge the movable member in a direction opposite to that in which it is urged by the spring.

Such arrangement per se is not suitable for use in the neck of a gas cylinder because of the need to ensure that the combined arrangement can not only regulate the gas pressure, but also a quick release coupling must be provided.

The invention provides a novel structure for connection to the neck of a gas cylinder to ensure that the objectives are achieved.

According to the invention there is provided a pressure regulating valve for use in a gas cylinder having an opening formed therein comprising a first valve member adapted to be retained in the opening in the cylinder; a second valve member disposed for movement with respect to first valve member, one of said first and second valve members presenting a valve closure surface and the other presenting a closure edge co-operating with said closure surface thereby forming an outlet valve from the cylinder; first biasing means biasing said second valve member against said first valve member so as to bring said closure edge into contact with said closure surface and close said outlet valve. Such a valve is known from US—A—2.611.390.

The invention is characterised by:
— a tubular actuator for acting on said movable second valve member, said actuator having an axial outlet passage, being supported for limited axial motion, and partly defining a chamber;
— at least one lateral port formed in said tubular actuator establishing communication between said chamber and said outlet passage;
— second biasing means acting between an axially adjustable support surface and said actuator so as to bias the outlet valve to the open position;
— whereby, when axial movement of said actuator takes place to move said closure surface and closure edge apart to permit a flow of gas into said chamber and through said at least one lateral port, pressure regulation is achieved by a counterbalancing of the net force of the first and second biasing means against the pressure force of the gas in said chamber.

An embodiment of the present invention will now be described, by way of example, with reference to the accompanying drawings, wherein:—

Fig. 1 is a cross-section of a fitting (when attached to a cylinder) useful in explaining the present invention;

Fig. 2 is a cross-sectional view of a pressure relief valve adapted for insertion into the fitting of Fig. 1 and also useful in explaining the invention;

Fig. 3 is a cross-sectional view of a valve of the general type disclosed in Fig. 2, which is according to the invention in that it also permits pressure regulating; and

Fig. 4 illustrates a modified version of the valve of Fig. 3.

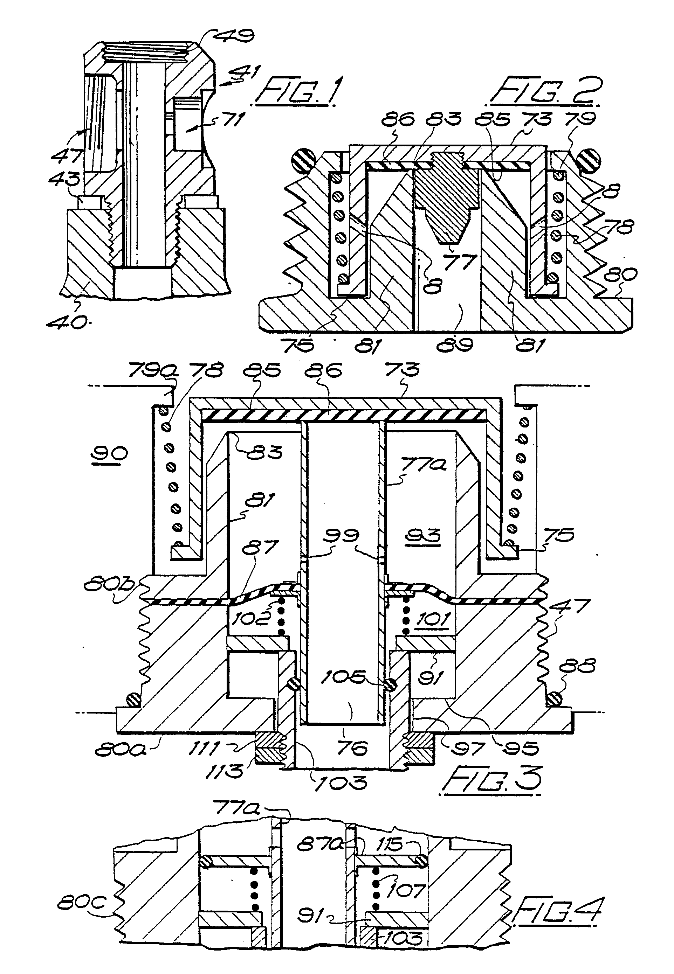

Normally, when a valve forms part of a quick release coupling and is utilized with a fitting in a gas cylinder, it extends all the way across the fitting. However, such is not possible when a sensor assembly or the like must extend along the axis of the fitting. Thus, a valving mechanism which can be contained within a smaller depth, i.e., essentially within the wall thickness of the fitting or cylinder neck is desirable in such a case. Furthermore, fittings of this nature usually contain a pressure relief mechanism such as a burst disc assembly adapted to burst under conditions of excessive pressure. As illustrated by the cross section of Fig. 1 the fitting 41 contains, in addition to an opening 47 for a valving mechanism and an opening 49 for a sensor or the like, an opening 71 for containing the burst disc assembly. This opening is threaded and the conventional assembly with a burst disc may be screwed therein. The fitting 41 is shown screwed to a high pressure cylinder 40 and sealed thereto by means of a seal 43.

A pancake valve forming part of a quick release coupling is shown in cross-sectional view in Fig. 2. It includes a valve seat member 73. This is essentially a cup-shaped member having an annular flange 75. Cup-shaped valve seat member 73 contains an interior projection 77 forming an actuator, which is either screwed or press-fitted therein. A spring 78 biases member 73 outwardly acting between the flange 75 and a surface 79 on a threaded part 80 of the valve. Part 80 contains an interior annular projection 81 with a sharp closure edge 83 which, in the closed position, abuts against the bottom surface 85 of member 73 which is covered with a valve seat (= valve closure surface) 86 of hard rubber or the like. Part 80 is in the nature of a hollow externally threaded annular nut which is screwed into appropriate threads in the opening 47.

As an alternative to forming surfaces 79 on part 80 they may be on the fitting 41 so that when part 80 is screwed into place, the spring 78 biases the cup-shaped part 73 against the sharp edge 83 of the annular inward projection 81. (See Fig. 3.) Such surfaces are shown in Fig. 1. In either case the biasing of spring 78 closes the valve. When the valve is coupled to the other part of the coupling a connection is made, the other coupling part having a pin which pushes against the projection 77 to move the member 73, acting against the biasing force of the spring 78, to lift the seat 86 away from the sharp edge 83 of annular projection 81.

Gas can then flow from inside the fitting 41 around the member 73 and/or through a plurality of ports 8 formed in the walls of member 73 and thence through the central opening 89 in the outer part of the valve. Of course, appropriate sealing will be provided between part 80 and the other part of the coupling. Such a quick release coupling of which one part includes a conventional valve structure is shown, for example, in said WO—A—82/01542.

An embodiment of the invention which embodies the valve of Fig. 2 is illustrated in Fig. 3. In Fig. 3, identical parts are given the same reference numerals. The valve of Fig. 3 in accordance with the invention in addition to part of a quick release coupling and acting as a check valve, also functions as a regulator valve. In the illustrated embodiment, the spring 78 acts between the flange 75 and a flange 79a formed in the wall of the fitting 90, or on the wall of a cylinder, rather than between the flange 75 and a flange on a nut 80. Nut 80, in this case, is split into parts 80a and 80b. Part 80b is inserted or threaded into the inner end of bore 47 and contains the portion 81 with the sharp edge 83. The manner in which edge 83 cooperates with the valve seat 86 is as before. Rather than utilizing a directly acting member such as the projection 77 an actuator in the form of a tubular member 77a with a central bore 76 forming an outlet passing is provided. Tubular member 77a is supported for axial motion by a diaphragm 87. The diaphragm is secured between the part 80b and the threaded nut part 80a and divides the bore into an inner chamber 93 and outer chamber 101. Part 80a is sealed in the opening 47 by means of an "O" ring seal 88. An axially movable support surface in the form of an annular disc 91 is provided and is capable of axial movement within the outer chamber 101 formed within the part 80a. A biasing spring 102 extends between support surface 91 and diaphragm 87. In a rest position, support surface 91 is thus biased against a flange 95 formed at the outside of the nut part 80a. The flange is defined at one edge by an entrance opening or bore 97. Ports 99 of a radial nature are formed in the tubular member 77a. Ports 99 couple inner chamber 93 to bore 76 forming the outlet passage. During operation, a probe 103 on the other part of the quick release coupling is inserted into the bore 97. It is provided with an "O" ring seal or the like 105 sealing against the tubular member 77a. Insertion causes the axially movable support surface 91 to move inward. The inward movement of the support surface 91 results in a similar inward movement of the diaphragm and with it the tubular member 77a. This moves the valve seat surface 86 away from the sharp edge 83 against the force of the biasing spring 78. This permits a flow around the cup-shaped member 73 and into the chamber 93. Flow from the chamber 93 through the ports 99 and bore 76 takes place. The flow continues out from the cylinder through the probe 103. However, as gas is admitted to the chamber 93 it acts on the diaphragm 87 to offset the force of the spring 102. The tubular member 77a thus tends to move outwardly closing off the valve formed between the sharp edge 83 and the valve seat 86. In this manner regulation and pressure reducing takes place with the valve so formed opening and closing to maintain a pressure at the chamber 93, and thus at the outlet, which is determined by a strength of the spring 102 and the position of the support surface 91. This position is in turn determined by the position of a nut 111 threaded on the probe 103. A lock nut 113 is provided so that once the desired pressure is established it may be maintained.

Fig. 4 illustrates modified manner of implementing the regulator and pressure reducing valve according to the invention. In this device, a nut 80c which is an integral unit and equivalent to the parts 80a and 80b of Fig. 3 is used. In this embodiment, a spring 107 acts between the support surface 91 and a rigid annular member 87a attached to the tubular member 77a. A seal 115 is inserted at the edge of the rigid member 87a.

Member 87a works as a piston and, again, the member 77a is free to move inward and outward axially.

Thus, a relatively compact unit which is part of a quick release coupling is a check valve, and at the same time acts as a regulating, pressure reducing valve is provided in a single unit.

## Claim

A pressure regulating valve for use in a gas cylinder (40) having an opening (47) formed therein, comprising a first valve member (80a, 80b) adapted to be retained in the opening (47) in the cylinder; a second valve member (73) disposed for movement with respect to first valve member (80a, 80b), one of said first and second valve members presenting a valve closure surface (86) and the other presenting a closure edge (83) co-operating with said closure surface (86) thereby forming an outlet valve from the cylinder; first biasing means (78) biasing said second valve member (73) against said first valve member (80a, 80b) so as to bring said closure edge (83) into contact with said closure surface (86) and close said outlet valve; characterised by:

— a tubular actuator (77a) for acting on said movable second valve member (73), said actuator (77a) having an axial outlet passage (76), being supported for limited axial motion, and partly defining a chamber (93);

— at least one lateral port (99) formed in said tubular actuator (77a) establishing communication between said chamber (93) and said outlet passage (76);

— second biasing means (102) acting between an axially adjustable support surface (91) and said actuator (77a) so as to bias the outlet valve to the open position;

— whereby, when axial movement of said actuator (77a) takes place to move said closure surface (86) and closure edge (83) apart to permit a flow of gas into said chamber (93) and through said at least one lateral port (99), pressure regulation is achieved by a counterbalancing of the net force of the first (78) and second (102) biasing means against the pressure force of the gas in said chamber (93).

## Revendication

Soupape de régulation de pression utilisable dans un cylindre de gaz (40) ayant une ouverture (47) qui y est formée, comprenant un premier organe de soupape (80a, 80b) adapté pour être retenu dans l'ouverture (47) dans le cylindre; un second organe de soupape (73) disposé pour se déplacer par rapport au premier organe de soupape (80a, 80b), l'un desdits premier et second organes de soupape présentant une surface de fermeture de soupape (86) et l'autre présentant un bord de fermeture (83) coopérant avec ladite surface de fermeture (86), pour ainsi former une soupape d'échappement du cylindre; des premiers moyens de sollicitation (78) sollicitant ledit second organe de soupape (73) contre ledit premier organe de soupape (80a, 80b) de façon à amener ledit bord de fermeture (83) en contact avec ladite surface de fermeture (86) et à fermer ladite soupape d'échappement; caractérisée par:

— un dispositif de commande tubulaire (77a) pour agir sur ledit second organe de soupape déplaçable (73), ledit dispositif de commande (77a) ayant un passage d'échappement axial (76), étant supporté pour un déplacement axial limité, et, définissant, en partie, une chambre (93);

— au moins un orifice latéral (99) formé dans ledit dispositif de commande tubulaire (77a) établissant une communication entre ladite chambre (93) et ledit passage d'échappement (76);

— de seconds moyens de sollicitation (102) agissant entre une surface de support axialement réglable (91) et ledit dispositif de commande (77a) de façon à solliciter la soupape d'échappement dans la position ouverte;

— par quoi, quand le mouvement axial dudit dispositif de commande (77a) a lieu pour éloigner ladite surface de fermeture (86) et le bord de fermeture (83) pour permettre un flux de gaz dans ladite chambre (93) et à travers ledit (ou lesdits) orifice latéral (99), une régulation de pression est obtenue par une compensation de la force nette des premiers (78) et seconds (102) moyens de sollicitation contre la force de pression du gaz dans ladite chambre (93).

## Patentanspruch

Druckregelventil zur Verwendung in einem Gaszylinder (40) mit einer darin gebildeten Öffnung (47), mit einem ersten Ventilglied (80a, 80b), das in der Öffnung (47) im Zylinder festgehalten werden kann; einem zweiten Ventilglied (73), das relativ zum ersten Ventilglied (80a, 80b) bewegbar angeordnet ist, wobei eines der beiden Ventilglieder eine Ventilschließfläche (86) und das andere einen mit der Schließfläche (86) zusammenarbeitenden Schließrand (83) aufweist, wodurch ein Auslaßventil aus dem Zylinder gebildet ist; einer ersten Vorspanneinrichtung (78), die das zweite Ventilglied (73) gegen das erste Ventilglied (80a, 80b) vorspannt, um den Schließrand (83) in Kontakt mit der Schließfläche (86) zu bringen und das Auslaßventil zu schließen; gekennzeichnet durch:

— ein rohrförmiges Betätigungsorgan (77a) zum Einwirken auf das bewegbare zweite Ventilglied (73), welches Betätigungsorgan (77a) einen axialen Auslaßkanal (76) hat, axial begrenzt bewegbar gehalten ist und zum Teil eine Kammer (93) begrenzt;

— wenigstens eine im rohrförmigen Betätigungsorgan (77a) gebildete seitliche Durchlaßöffnung (99), die eine Verbundung zwischen der Kammer (93) und dem Auslaßkanal (76) herstellt;

— eine zweite Vorspanneinrichtung (102), die zwischen einer axial einstellbaren Stützfläche (91) und dem Betätigungsorgan (77a) wirkt, um das Auslaßventil in die Offenstellung vorzuspannen;

— wodurch bei einer axialen Bewegung des Betätigungsorgans (77a), um die Schließfläche (86) und den Schließrand (83) auseinander zu bewegen, um ein Strömen von Gas in die Kammer (93) und durch die wenigstens eine seitliche Durchlaßöffnung (99) zu ermöglichen, eine Druckregulierung durch Ausgleichen der resultierenden Kraft der ersten (78) und zweiten (102) Vorspanneinrichtung gegenüber der Druckkraft des Gases in der Kammer (93) erreicht wird.

FIG.1

FIG.2

FIG.3

FIG.4